(19) Europäisches Patentamt / European Patent Office / Office européen des brevets

(11) **EP 3 921 108 B1**

(12) **FASCICULE DE BREVET EUROPEEN**

(45) Date de publication et mention de la délivrance du brevet:
**08.11.2023 Bulletin 2023/45**

(21) Numéro de dépôt: **20706798.4**

(22) Date de dépôt: **06.02.2020**

(51) Classification Internationale des Brevets (IPC):
**B23K 26/00** (2014.01)  **B23K 26/0622** (2014.01)
**B23K 26/352** (2014.01)  **B23K 26/362** (2014.01)
**B23K 26/40** (2014.01)  **G01N 25/00** (2006.01)

(52) Classification Coopérative des Brevets (CPC):
**B23K 26/0006; B23K 26/0624; B23K 26/355;
B23K 26/362; B23K 26/40**

(86) Numéro de dépôt international:
**PCT/FR2020/050213**

(87) Numéro de publication internationale:
**WO 2020/161445 (13.08.2020 Gazette 2020/33)**

(54) **METHODE DE DETERMINATION DES CONDITIONS OPERATIONNELLES D'UN PROCEDE D'ABLATION OU DE SOUDAGE LASER FEMTOSECONDE A TRES HAUTE CADENCE POUR UN MATERIAU DONNE, PROCEDE D'ABLATION D'UN MATERIAU DONNE, ET PROCEDE DE SOUDAGE LASER ENTRE PIECES D'UN MATERIAU DETERMINE**

VERFAHREN ZUR BESTIMMUNG DER BETRIEBSBEDINGUNGEN EINES VERFAHRENS ZUR FEMTOSEKUNDENLASERABLATION ODER -SCHWEISSEN MIT HOHER WIEDERHOLRATE FÜR EIN BESTIMMTES MATERIAL, VERFAHREN ZUR ABLATION EINES BESTIMMTEN MATERIALS, UND VERFAHREN ZUM LASERSCHWEISSEN ZWISCHEN TEILEN EINES BESTIMMTEN MATERIALS

METHOD FOR DETERMINING THE OPERATIONAL CONDITIONS OF A METHOD FOR HIGH-REPETITION RATE FEMTOSECOND LASER ABLATION OR WELDING FOR A GIVEN MATERIAL, METHOD FOR LASER ABLATING OF A GIVEN MATERIAL, AND METHOD FOR LASER WELDING BETWEEN PARTS OF A DETERMINED MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.02.2019 FR 1901188**

(43) Date de publication de la demande:
**15.12.2021 Bulletin 2021/50**

(73) Titulaires:
• **Amplitude**
  **33600 Pessac (FR)**
• **Centre national de la recherche scientifique**
  **75016 Paris (FR)**
• **UNIVERSITE DE BORDEAUX**
  **33000 Bordeaux (FR)**

(72) Inventeurs:
• **AUDOUARD, Eric**
  **43130 Solignac-Sous-Roche (FR)**
• **BONAMIS, Guillaume**
  **33400 TALENCE (FR)**
• **MISHCHICK, Konstantin**
  **33000 Bordeaux (FR)**
• **HONNINGER, Clemens**
  **33610 CESTAS (FR)**
• **LOPEZ, John**
  **33170 GRADIGNAN (FR)**
• **MANEK-HONNINGER, Inka**
  **33610 CESTAS (FR)**
• **MOTTAY, Eric**
  **33130 BEGLES (FR)**

(74) Mandataire: **Jacobacci Coralis Harle**
  **32, rue de l'Arcade**
  **75008 Paris (FR)**

(56) Documents cités:
US-A1- 2008 296 273    US-A1- 2012 187 860
US-A1- 2013 008 880    US-A1- 2018 154 572

**Description**

La présente invention concerne de manière générale le domaine des procédés d'ablation et de soudage laser.

Elle concerne plus particulièrement le domaine des procédés d'ablation laser d'une surface d'un matériau par une rafale d'impulsions laser ou une succession de rafales d'impulsions laser à très haute cadence, de l'ordre du GHz.

L'ablation de surface d'un matériau par une impulsion laser microseconde, nanoseconde picoseconde ou femtoseconde est aujourd'hui une technique largement utilisée pour modifier de façon contrôlée la surface d'un matériau (perçage, découpe, structuration). Les matériaux mis en jeu sont variés et sont par exemple des matériaux semi-conducteurs, métalliques, diélectriques ou même des tissus biologiques.

Les impulsions femtosecondes conduisent habituellement aux meilleures qualités de réalisation, mais l'efficacité d'ablation de ces impulsions est également plus faible que pour des impulsions plus longues de l'ordre de la nanoseconde. La récente possibilité de disposer de laser à plus forte puissance moyenne permet d'utiliser des plus hautes cadences de répétition autour du MHz pour diminuer les temps de réalisation. Toutefois, l'utilisation de ces hautes cadences de répétition des impulsions délivrées par le laser peut générer un phénomène d'accumulation thermique non désiré. Ce phénomène d'accumulation thermique non désiré vient dégrader la qualité d'ablation du matériau. Il est donc essentiel de développer des méthodes alternatives destinées à améliorer la qualité de l'ablation de surface d'un matériau donné.

Dans quelques cas particuliers, il a été récemment montré dans la littérature scientifique qu'une très forte cadence des impulsions laser femtoseconde (supérieure à la dizaine de MHz et autour de 1 GHz) peut permettre une importante augmentation de l'efficacité d'ablation. Dans ce cas, le nombre de paramètres de fonctionnement est très important : la longueur d'onde du laser, la cadence de répétition des impulsions délivrées par le laser, la durée des impulsions, l'énergie des impulsions, la focalisation, la puissance moyenne des impulsions, le matériau à ablater.... Ce nombre important de paramètres de fonctionnement rend difficile la détermination des paramètres de fonctionnement les plus adaptés à un matériau donné. De plus, la nature exacte des mécanismes d'ablation laser d'un matériau par des rafales d'impulsions femtosecondes à cadence GHz est encore controversée dans la littérature scientifique.

Le document US 2012/187860 A1 décrit l'ensemble des caractéristiques du préambule des revendications 1 et 7. D'autre part, Le document US 2013/008880 A1 décrit l'ensemble des caractéristiques du préambule de la revendication 15.

Selon l'art antérieur, une ablation à la surface d'un matériau se produit lorsque la fluence de la ou des impulsions laser est égale à un seuil d'ablation déterminé pour chaque matériau.

L'invention concerne aussi un procédé de soudage laser à haute cadence sans perte de matière.

Une méthode de détermination des conditions opérationnelles d'un procédé d'ablation ou de soudage laser femtoseconde à très haute cadence pour un matériau donné selon un premier aspect de l'invention est défini dans la revendication 1.

Conformément à l'invention, le nombre N d'impulsions de la rafale d'impulsions laser est supérieur ou égal à un nombre Nc d'impulsions de chauffage et d'ablation, Nc étant défini par l'équation $Nc=(L^2.f)/D$, où L représente une profondeur d'essai et D représente un coefficient de diffusion thermique du matériau à ablater, Nc étant supérieur ou égal à 10, et où la fluence caractéristique par impulsion est égale à $Fcar=FTcar/Nc$.

Un procédé d'ablation laser d'un matériau déterminé selon un deuxième aspect de l'invention est défini dans la revendication 7.

Une étape préalable du procédé d'ablation laser peut consister à envoyer une rafale d'impulsions lumineuses femtosecondes à la surface d'un matériau à la cadence de répétition des impulsions délivrées par le laser pour déterminer expérimentalement une fluence totale caractéristique $FT_{car}$ définie par l'absence de cratère d'ablation si $FT<FT_{car}$ et la présence d'un cratère d'ablation pour $FT=FT_{car}$. Il s'agit typiquement d'une fluence seuil pour le procédé d'ablation par la rafale d'impulsions femtosecondes de cadence f et de nombre d'impulsion Nc.

Selon le procédé d'ablation, la profondeur d'ablation obtenue est proche de la valeur de la profondeur d'essai L pour $FT=FT_{car}$ et $N=Nc$.

Selon des aspects particuliers et intéressants de l'invention :

- la méthode comprend une détermination expérimentale de la valeur de la fluence totale caractéristique $FT_{car}$ de la rafale pour le nombre d'impulsions Nc, $FT_{car}$ étant la fluence totale minimale d'obtention d'un cratère en surface du matériau ;
- la méthode comprend une deuxième étape de détermination d'une fluence totale opérationnelle $FT_{opt}$ pour une rafale d'impulsions laser comprenant Nc impulsions laser ;
- la fluence totale opérationnelle $FT_{opt}$ est comprise entre 2 fois la fluence totale caractéristique $FT_{car}$ et 6 fois la fluence totale caractéristique $FT_{car}$;
- la méthode comprend une troisième étape de détermination d'un nombre N d'impulsions de la rafale pour ablater le matériau sur une profondeur supérieure à la profondeur d'essai L, N étant supérieur à Nc et la fluence par impulsion de la rafale étant égale à la fluence totale caractéristique $FT_{car}$ divisée par le nombre Nc d'impulsions de chauffage et d'ablation ;

- le nombre N d'impulsions de la rafale est égal à N=Nc+Na où Na est un nombre entier positif ou négatif et Nc le nombre d'impulsions de chauffage et d'ablation ;
- le nombre N d'impulsions de la rafale est inférieur au nombre Nc d'impulsions de chauffage et d'ablation, pour ablater le matériau sur une profondeur inférieure à la profondeur d'essai ;
- le nombre entier N d'impulsions est compris entre 10 et 10000 ; de préférence supérieur à 50 ; par exemple compris entre 200 et 500, ou entre 300 et 500 ;
- la profondeur d'ablation varie en fonction du nombre N d'impulsions de la rafale ;
- une autre fluence totale caractéristique $FT_{car2}$ est calculée en fonction du nombre N d'impulsions de la rafale différent de Nc, et N=Nc+Na où Na est un nombre entier positif ou négatif avec $FT_{car2}=FT_{car}+Na.FT_{car}/Nc$ ;
- la fluence totale opérationnelle est comprise entre 2 fois l'autre fluence totale caractéristique $FT_{car2}$ et 6 fois l'autre fluence totale caractéristique $FT_{car2}$ ;
- le matériau à ablater est un matériau semi-conducteur, métallique, diélectrique, polymère, organique ou composite ;
- les dimensions transverses du faisceau d'impulsions incident sur le matériau à ablater sont inférieures ou égales à 200 $\mu$m ;
- les impulsions d'une rafale ont une durée d comprise entre 1 fs et inférieure à 1 ps ;
- la rafale d'impulsions laser a une longueur d'onde comprise entre 200 nm et 3 $\mu$m ;
- le matériau étant du silicium, le nombre N d'impulsions est compris entre 50 et 200, la fluence caractéristique par impulsion constante $F_{car}$ est d'environ 0,018 J/cm$^2$, la fréquence de répétition f intra-rafale est comprise entre 0,88 GHz et 3,52 GHz, pour une profondeur d'essai L comprise entre 2,2 $\mu$m et 4,4 $\mu$m ;
- le matériau étant du cuivre, le nombre N d'impulsions est compris entre 100 et 400, la fluence caractéristique par impulsion $F_{car}$ constante est d'environ 0,03 J/cm$^2$, la fréquence de répétition f intra-rafale étant de 1,76 GHz, pour une profondeur d'essai L comprise entre 2,5 $\mu$m et 5,2 $\mu$m.

Le nombre Na étant fixé, une autre fluence totale caractéristique $FT_{car2}$ pour le nombre d'impulsions N=Nc+Na est donnée par $FT_{car2}=FT_{car}+Na.F_{car}$. On obtient ainsi une valeur de l'autre fluence totale caractéristique $FT_{car2}$ définissant le seuil d'ablation pour la rafale de cadence f et de nombre d'impulsions N=Nc+Na pour un matériau donné. La profondeur d'ablation obtenue est donc plus importante, et sa valeur estimée est de $L_2=\sqrt{(D.N/f)}$. Selon la méthode on obtient expérimentalement une fluence totale proche de $FT_{car2}$ si la profondeur d'essai est fixée à L=$L_2$. N étant fixé à N=Nc+Na, on obtient une profondeur d'ablation supérieure à $L_2$ en augmentant la fluence totale F au-delà de $FT_{car2}$ et selon la même règle énoncée pour $FT_{opt}$, c'est-à-dire pour FT comprise entre 2 fois l'autre fluence totale caractéristique $FT_{car2}$ et 6 fois l'autre fluence totale caractéristique $FT_{car2}$.

Selon une variante de la méthode, le nombre total d'impulsion N peut être diminué à partir de Nc avec Na négatif, de telle sorte que N=Nc+Na. La profondeur d'ablation effective $L_2$ est donc inférieure à la profondeur d'essai L, la procédure d'optimisation de la fluence totale FT restant la même que décrite ci-dessus.

D'autres aspects particuliers et avantageux du procédé d'ablation laser sont les suivants.

L nombre N d'impulsions de la rafale d'impulsions laser est supérieur ou égal à un nombre Nc d'impulsions de chauffage et d'ablation, Nc étant défini par l'équation Nc=$(L^2.f)/D$, où L représente une profondeur d'essai et D représente un coefficient de diffusion thermique du matériau à ablater, Nc étant supérieur ou égal à 10, et où la fluence caractéristique par impulsion est égale à $F_{car}=FT_{car}/Nc$.

Le nombre N d'impulsions de la rafale est compris entre 100 et 10000.

Chaque impulsion de la rafale a une fluence F inférieure ou égale d'un ordre de grandeur à la fluence seuil d'ablation Fs1 du matériau par une seule impulsion laser.

Chaque impulsion de la rafale a une fluence F inférieure d'un facteur compris entre un ordre de grandeur et deux ordres de grandeur par rapport à la fluence seuil Fs1 d'ablation par une seule impulsion laser.

Les dimensions transverses du faisceau d'impulsions laser incident sur le matériau à ablater sont inférieures ou égales à 200 $\mu$m.

Une rafale a une énergie totale comprise entre 1 $\mu$J et 20 mJ.

De façon particulièrement avantageuse, le procédé d'ablation laser comprend l'application d'une pluralité de rafales à une cadence de répétition comprise entre 10 kHz et 40 MHz.

Un procédé de soudage laser entre pièces d'un matériau déterminé selon un troisième aspect de l'invention est défini dans la revendication 15.

De plus, diverses autres caractéristiques de l'invention ressortent de la description annexée effectuée en référence aux dessins qui illustrent des formes, non limitatives, de réalisation de l'invention et où :

- la figure 1 est un graphique représentant un exemple du profil temporel d'une rafale d'impulsions laser femtosecondes de fréquence de répétition de l'ordre du GHz,

- la figure 2 est un graphique représentant l'évolution de l'efficacité d'ablation (ou volume ablaté par fluence totale) à la surface d'un matériau silicium en fonction de la fluence totale FT par rafale d'impulsions de fréquence GHz,

- la figure 3 est un graphique représentant l'évolution de l'efficacité d'ablation (ou volume ablaté par fluence totale) à la surface d'un matériau cuivre en fonction de la fluence totale FT par rafale d'impulsions de fréquence GHz,

- la figure 4 est une représentation d'un exemple d'une étape pour déterminer la fluence totale caractéristique d'ablation d'un matériau silicium pour un nombre entier N d'impulsions tel que N=Nc et avec ici une fluence totale de la rafale FT telle que FT<$FT_{car}$, n'induisant pas d'ablation,

- la figure 5 est une représentation d'un exemple d'une autre étape pour déterminer la fluence totale caractéristique d'ablation d'un matériau silicium pour un nombre entier N d'impulsions tel que N=Nc et avec ici une fluence totale de la rafale FT telle que FT≈$FT_{car}$, qui induit une ablation,

- la figure 6 est une représentation d'un exemple d'une autre étape pour déterminer la fluence totale caractéristique d'ablation d'un matériau silicium en fonction du nombre entier N d'impulsions tel que N=Nc et avec ici une fluence totale de la rafale FT telle que FT>$FT_{car}$, qui induit une ablation plus profonde que sur la figure 5,

- les figures 7A-7C illustrent une représentation schématique du mécanisme d'ablation mis en jeu lors d'une ablation laser femtoseconde à haute cadence à la surface d'un matériau, en fonction de la fluence totale d'une rafale de Nc impulsions femtosecondes,

- la figure 8 est une représentation schématique d'une étape du mécanisme d'ablation mis en jeu lors d'une ablation laser à la surface d'un matériau.

Il est à noter que sur ces figures les éléments structurels et/ou fonctionnels communs aux différentes variantes peuvent présenter les mêmes références.

L'invention concerne en particulier le domaine des impulsions d'une rafale ayant une durée de l'ordre de la femtoseconde (inférieure à une picoseconde) et une fréquence de répétition intra-rafale de l'ordre du GHz.

La présente divulgation propose une méthode de détermination des conditions opérationnelles d'un procédé d'ablation laser pour un matériau donné comprenant une étape de détermination d'un ensemble de paramètres pour une cadence de répétition f de la rafale de l'ordre du GHz consistant en un nombre entier N d'impulsions d'une rafale d'impulsions laser, et une fluence F de chaque impulsion de la rafale. La fluence totale de la rafale FT vue par le matériau étant égale au produit N.F. La cadence de répétition C des rafales est un autre paramètre de la source laser utilisée.

Le nombre entier N d'impulsions d'une rafale d'impulsions laser est au moins supérieur ou égal à 10, particulièrement le nombre N d'impulsions est compris entre 10 et 800. Dans certaines applications, le nombre N d'impulsions femtosecondes d'une rafale est supérieur à 20, ou à 50, compris entre 100 et 800, ou entre 200 et 600, ou encore entre 300 et 400.

La durée T d'une rafale de N impulsions à une cadence de répétition f est définie par

$$T=N/f.$$

Les impulsions d'une rafale ont une fréquence de répétition f comprise entre 100 MHz et 100 GHz, et de préférence comprise entre 1 GHz et 100 GHz, ou entre 1 GHz et 10 GHz.

L'énergie totale d'une rafale $E_b$ peut être comprise entre 1 $\mu$J et 20 mJ en fonction du laser utilisé.

La rafale d'impulsions a une cadence de répétition C comprise entre 10 kHz et 40 MHz, le matériau étant en mouvement ou non, les différentes rafales se recouvrent ou non. La cadence de répétition est toutefois limitée par la durée de la rafale T de sorte à vérifier que la durée de la rafale T est strictement inférieure à l'inverse de la cadence de répétition C.

Selon la présente divulgation, chaque impulsion d'une rafale a une fluence F inférieure à une fluence seuil d'ablation Fs1 du matériau par une seule impulsion laser ayant les mêmes propriétés spatiales, spectrales et temporelles qu'une impulsion de ladite rafale mais émise à la demande, et ne faisant pas partie d'une rafale à haute cadence.

La rafale d'impulsions laser possède une longueur d'onde comprise entre 200 nm et 3 $\mu$m.

Pour l'ensemble des figures, on définit un repère XYZ, où la direction de l'axe Z est orthogonale à la surface du matériau à ablater et le faisceau laser se propage suivant l'axe Z.

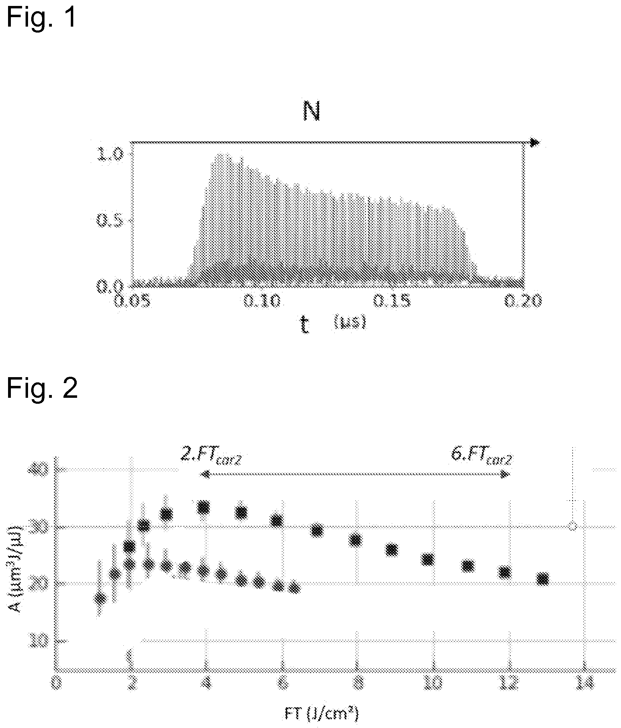

La figure 1 est un graphique représentant un exemple d'une rafale comprenant N impulsions. Ici, le nombre entier N d'impulsions de ladite rafale est de 100 et les impulsions de ladite rafale ont une fréquence de répétition f égale à 0,88 GHz. Chaque impulsion de la rafale a une durée d inférieure ou égale à 550 fs. Ladite rafale a une énergie $E_b$ pouvant varier de 1 μJ à 100 μJ, dans cet exemple l'énergie $E_b$ est égale à 33 μJ. Chaque rafale de N impulsions a une durée totale T égale à 114 ns. Les rafales sont délivrées par la source laser à une cadence de répétition C pouvant varier de 1 kHz à 200 kHz.

Dans un autre exemple, le nombre entier N d'impulsions d'une rafale d'impulsions est de 50 et les impulsions de ladite rafale ont une fréquence de répétition f égale à 0,88 GHz. Chaque impulsion de la rafale a une durée d inférieure ou égale à 550 fs. Ladite rafale a une énergie $E_b$ pouvant varier de 1 μJ à 100 μJ et une fréquence de répétition C ajustable comprise entre 1 kHz à 200 kHz et une durée totale T égale à 57 ns.

Dans un autre exemple, le nombre entier N d'impulsions d'une rafale d'impulsions est de 200 et les impulsions de ladite rafale ont une fréquence de répétition f égale à 0,88 GHz. Chaque impulsion de la rafale a une durée d inférieure ou égale à 550 fs. Ladite rafale a une énergie $E_b$ pouvant varier de 1 μJ à 100 μJ et une fréquence de répétition C ajustable comprise entre 1 kHz à 200 kHz et une durée totale T égale à 228 ns.

L'utilisation d'un dispositif d'usinage permet la gestion de l'adressage des rafales sur un échantillon soit par une superposition spatiale des rafales dans un cas statique, soit par un décalage spatial complet ou partiel des impulsions en cas de mouvement de l'échantillon ou du faisceau laser.

Nous considérons un matériau à ablater ayant un coefficient de diffusion thermique D donné exprimé en cm²/s.

Sans être lié par une théorie, selon la présente méthode, le nombre entier N d'impulsions femtosecondes de fréquence de répétition de l'ordre du GHz pour une rafale est égal à la somme d'un nombre entier Nc d'impulsions permettant le chauffage et l'ablation sur une profondeur $L_{th}$ et d'un nombre entier Na d'impulsions complémentaires, avec $L_{th}$ correspondant à longueur de profondeur thermique associée au matériau pour la cadence de répétition f.

Dans une première étape, on détermine le nombre Nc d'impulsions de chauffage et d'ablation correspondant au nombre d'impulsions femtosecondes pour une rafale de cadence de répétition f qui est nécessaire pour chauffer le matériau à ablater sur une profondeur d'essai L donnée comme point de départ de l'optimisation, de manière à modifier la valeur de la fluence seuil Fs1 jusqu'à atteindre une autre fluence seuil Fs2 inférieure à la fluence seuil Fs1. La fluence totale FT de la rafale est définie de sorte que la fluence F par impulsion est inférieure à la fluence seuil Fs1. Le nombre Nc est défini par l'équation Nc = (L².f)/D. Autrement dit, selon la présente divulgation, dans la rafale d'impulsions femtosecondes, la fluence F par impulsion est inférieure à la fluence seuil Fs1 et supérieure ou égale à l'autre fluence seuil Fs2.

Le nombre Nc correspond au nombre d'impulsions de la rafale permettant le chauffage du matériau à ablater suivant l'axe Z sur une profondeur L. Le nombre Nc représente une borne inférieure du nombre d'impulsion N pour l'ablation à la cadence de répétition f des impulsions d'une rafale au voisinage de la profondeur L. Autrement dit, Nc représente le nombre d'impulsions où apparaît un cratère d'ablation de profondeur proche de L en surface du matériau.

La profondeur d'essai L est obtenue pour une valeur de fluence totale caractéristique $FT_{car}$ d'une rafale d'impulsions de cadence de répétition f. Cette fluence totale caractéristique $FT_{car}$ correspond à la fluence totale de la rafale minimale permettant l'observation d'un cratère d'ablation en surface du matériau. La fluence totale caractéristique $FT_{car}$ d'une rafale d'impulsions divisée par le nombre d'impulsions N est en général différente de la fluence Fs1 caractérisant le seuil d'ablation pour une impulsion unique et est inférieure à la fluence Fs1, soit $FT_{car}/N<Fs1$.

En pratique, pour un matériau donné de diffusion thermique connue D, à une cadence de répétition donnée f et pour un objectif de profondeur d'ablation du matériau L, le nombre d'impulsion Nc est calculé en fonction de D, f et L. Une fois le nombre Nc d'impulsions estimé, la fluence totale caractéristique $FT_{car}$ peut être déterminée expérimentalement comme la fluence minimale d'une rafale de Nc impulsions permettant la formation d'un cratère de profondeur L.

Dans une deuxième étape, on détermine ensuite la fluence totale opérationnelle de la rafale $FT_{opt}$ pour N=Nc correspondant à un optimum d'efficacité d'ablation qui permet d'optimiser la profondeur d'ablation ou le volume d'ablation en maintenant une efficacité d'ablation proche de son maximum. On estime que $FT_{car}$ est analogue à une fluence seuil pour l'ablation par rafale GHz. Il est habituellement admis que l'efficacité d'ablation peut être estimée en connaissant la fluence seuil d'ablation $FT_{th}$. La profondeur d'ablation varie en $Ln(FT/FT_{th})$ et le volume d'ablation en $Ln^2(FT/FT_{th})$. Les grandeurs spécifiques $Ln(F/FT_{th})/FT$ et $Ln^2(FT/FT_{th})/FT$ permettent d'estimer l'efficacité d'ablation en fonction de la fluence par impulsion F et présentent une valeur optimale, proche de $FT_{th}$, puis saturent. On choisit donc une fluence totale opérationnelle $FT_{opt}$ de la rafale d'impulsions pour N=Nc dans l'intervalle $2.FT_{car} < FT_{opt} < 6.FT_{car}$.

Un exemple de valeur de la fluence totale opérationnelle de la rafale $FT_{opt}$ est proche de la valeur de fluence totale caractéristique $FT_{car}$ et peut être estimée en multipliant par deux la fluence totale caractéristique $FT_{car}$ soit $FT_{opt}$ = $2FT_{car}$.

La phase de chauffage/ablation, se fait dans des conditions optimales pour une fluence caractéristique $F_{car}$ par impulsion proche de la fluence d'ablation seuil Fs2. Cette fluence seuil Fs2 n'est pas connue et est difficilement mesurable. Selon l'invention, on fait l'approximation que la fluence caractéristique $F_{car}$ par impulsion est $F_{car}=FT_{car}/Nc$. Cette valeur demeure environ constante pour chaque couple ($FT_{car}$, Nc) correspondant à un seuil d'obtention de cratère à la cadence f des impulsions pour un matériau donné.

Une troisième étape optionnelle de la présente méthode consiste à déterminer le nombre N d'impulsion pour une profondeur d'ablation supérieur à L. Lorsque la rafale a été optimisée pour une fluence totale FT égale à $FT_{car}$, la matière a été chauffée en surface du cratère et le seuil d'ablation pour une unique impulsion est passée d'une valeur connue pour le matériau Fs1 à une valeur plus faible Fs2 non connue et difficile à mesurer.

Il est judicieux d'augmenter le nombre N d'impulsions pour obtenir une profondeur d'ablation plus importante, en évitant le phénomène de saturation apparaissant par l'augmentation seule de la fluence. On choisit d'augmenter le nombre N d'impulsions d'une valeur Na, soit N=Nc+Na, en maintenant la même fluence par impulsion $F_{car}=FT_{car}/Nc$. La fluence caractéristique par impulsion $F_{car}$ reste identique pour tous les couples ($FT_{car}$,Nc) pour le même matériau.

Il en résulte une autre valeur de la fluence totale FT égale à $FT_{car}$+Na.F soit égale à $FT_{car}$(1+Na/Nc). Par exemple, si on prend Na=Nc, FT=2.$FT_{car}$ et N=2.Nc. Plus particulièrement, pour N=Nc=50, on obtient une fluence totale caractéristique $FT_{car}$=0,96 J/cm$^2$ dans le cas d'un matériau silicium. En ajoutant Na impulsions complémentaires, on obtient un nombre N d'impulsions égal à 2.Nc soit 100, et la valeur de l'autre fluence totale caractéristique $FT_{car2}$ est égale à 2.$FT_{car}$ soit 1,9 J/cm$^2$.

Pour optimiser à nouveau la fluence totale FT et obtenir l'autre valeur de la fluence totale opérationnelle de la rafale $FT_{opt2}$ supérieure à $FT_{car2}$, on reprend la procédure décrite précédemment et on obtient que la fluence totale opérationnelle de la rafale $FT_{opt2}$ est comprise dans l'intervalle suivant 2.$FT_{car2}$ < $FT_{opt2}$ < 6.$FT_{car2}$.

La figure 2 représente l'évolution de l'efficacité d'ablation (ou volume ablaté par fluence totale) à la surface d'un matériau silicium en fonction de la fluence totale FT par rafale d'impulsions de fréquence GHz. Dans cet exemple, le nombre N d'impulsions est égal à 50 (points ronds) et 100 (points carrés), et la fréquence de répétition f est de 0,88 GHz.

Sur le graphique, on observe que l'efficacité d'ablation de la surface du matériau présente un seuil d'ablation pour une valeur de fluence totale FT correspondant à la fluence totale caractéristique $FT_{car}$ permettant l'observation d'un cratère d'ablation en surface du matériau. Puis l'efficacité d'ablation augmente au fur et à mesure que la fluence totale FT augmente jusqu'à atteindre une valeur maximale d'efficacité d'ablation correspondant à la fluence totale de la rafale $FT_{opt}$. La fluence totale opérationnelle de la rafale $FT_{opt}$ s'étend dans une gamme comprise entre 2.$FT_{car}$ à 6.$FT_{car}$ et cette gamme correspond à l'optimum d'efficacité d'ablation. Une fois le maximum d'efficacité d'ablation atteint, l'efficacité d'ablation décroit au fur et à mesure que la fluence totale FT continue d'augmenter. Dans ce cas, la profondeur d'ablation ou le volume ablaté continue de croitre mais la qualité se dégrade par augmentation de la quantité d'énergie non utile pour l'ablation.

Ici, on obtient pour N=Nc=50 (points ronds) une efficacité d'ablation minimale égale à environ 18 $\mu m^3/\mu J$ pour une fluence totale caractéristique $FT_{car}$ égale à 0,96 J/cm$^2$. Le maximum d'efficacité d'ablation est égal à environ 25 $\mu m^3/\mu J$ pour une fluence totale opérationnelle de la rafale $FT_{opt}$ comprise entre environ 2 J/cm$^2$ et 6 J/cm$^2$.

Pour N=2Nc=100 (points carrés), on obtient une efficacité d'ablation minimale égale à environ 27 $\mu m^3/\mu J$ pour une fluence totale caractéristique $FT_{car2}$ égale à 2$FT_{car}$ soit 1,9 J/cm$^2$. Le maximum d'efficacité d'ablation est égal à environ 34 $\mu m^3/\mu J$ pour une fluence totale opérationnelle de la rafale $FT_{opt}$ comprise entre environ 4 J/cm$^2$ et 12 J/cm$^2$.

On vérifie que la fluence par impulsion $F_{car}$ est quasiment constante. On vérifie aussi que l'efficacité d'ablation est optimale entre 2.$FT_{car2}$ et 6.$FT_{car2}$.

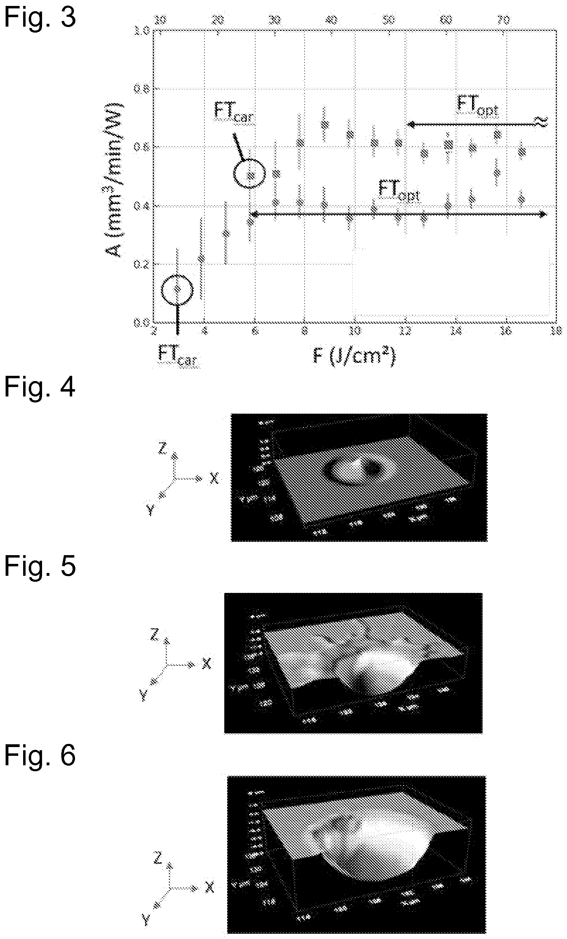

La figure 3 représente l'évolution de l'efficacité d'ablation (ou volume ablaté par fluence totale) à la surface d'un matériau cuivre en fonction de la fluence totale FT par rafale d'impulsions de fréquence GHz. Dans cet exemple, le nombre N d'impulsions est égal à 100 (points ronds) et 200 (points carrés), et la fréquence de répétition f est de 1,76 GHz.

Sur le graphique, on obtient pour N=100 (points ronds) une efficacité d'ablation minimale égale à environ 0,1 mm$^3$/min/W pour une fluence totale caractéristique $FT_{car}$ égale à environ 3 J/cm$^2$. Le maximum d'efficacité d'ablation est égal à environ 0,5 mm$^3$/min/W pour une fluence totale opérationnelle de la rafale $FT_{opt}$ comprise entre environ 6 J/cm$^2$ et 18 J/cm$^2$.

Sur le graphique, on obtient pour N=200 (points carrés) une efficacité d'ablation minimale égale à environ 0,5 mm$^3$/min/W pour une fluence totale caractéristique $FT_{car}$ égale à environ 6 J/cm$^2$. Le maximum d'efficacité d'ablation est égal à environ 0,7 mm$^3$/min/W pour une fluence totale opérationnelle de la rafale $FT_{opt}$ comprise entre environ 12 J/cm$^2$ et 36 J/cm$^2$.

Les figures 4, 5 et 6 représentent un exemple de l'évolution de la profondeur d'ablation d'un matériau silicium en fonction du nombre entier N d'impulsions et de la fluence totale de la rafale FT.

Dans chaque exemple illustré sur les figures 4, 5, et 6, la fréquence de répétition C est de 100 kHz, la fréquence de répétition f est de 0,88 GHz, la période entre deux rafales successives est de 10 $\mu$s, la durée totale T d'une rafale est de 57 ns, la durée d des impulsions d'une rafale est de 550 fs.

La figure 4 représente le profil d'ablation à la surface du matériau silicium pour un nombre N d'impulsions égal à Nc et pour une fluence totale FT de la rafale inférieure à la fluence totale caractéristique $FT_{car}$. Dans ces conditions, on observe sur l'image obtenue par profilométrie optique, la formation d'une bosse à la surface du matériau : le matériau est chauffé mais ne peut pas être ablaté. Dans cet exemple, le nombre N d'impulsions est de 100, et la fluence totale FT est égale à 1,7 J/cm$^2$.

La figure 5 représente le profil d'ablation à la surface du matériau silicium pour un nombre N d'impulsions égal à Nc et pour une fluence totale FT de la rafale proche de la fluence totale caractéristique $FT_{car}$. Dans ces conditions, on observe sur l'image obtenue par profilométrie optique, la formation d'un cratère à la surface du matériau ayant une profondeur minimale. Dans cet exemple, le nombre N d'impulsions est de 100, et la fluence totale FT est égale à 1,8 J/cm². On observe que la profondeur d'ablation générée par une rafale de 100 impulsions est d'environ 2,6 μm.

La figure 6 représente le profil d'ablation à la surface du matériau silicium pour un nombre N d'impulsions égal à Nc et pour une fluence totale FT de la rafale supérieure à la fluence totale caractéristique $FT_{car}$. Dans ces conditions, on observe sur l'image obtenue par profilométrie optique, l'augmentation de la profondeur d'ablation du cratère précédemment formé. La profondeur du cratère augmente au fur et à mesure que la fluence totale FT augmente, avec un optimum d'efficacité. Dans cet exemple, le nombre N d'impulsions est de 100 et la fluence totale FT est égale à 5,8 J/cm². On observe que la profondeur d'ablation générée par une rafale de 100 impulsions est d'environ 4,5 μm.

On observe que la profondeur d'ablation augmente au fur et à mesure que le nombre N d'impulsions augmente pour N>Nc et FT>$FT_{car}$. Cet effet technique ne découle nullement de l'enseignement dans le domaine technique où l'ablation pour des impulsions femtosecondes est très controversé. La profondeur d'ablation pour une rafale comprenant 50 impulsions passe de 3,5 μm à 7,5 μm pour une rafale comprenant 200 impulsions, la fluence totale FT de la rafale étant de 5,8 J/cm² dans les deux cas.

Une interprétation possible est que la présente méthode repose sur le couplage d'un phénomène d'accumulation de chaleur et d'ablation très efficace à la surface du matériau qui diffère du mécanisme mis en jeu pour l'ablation par une impulsion unique de durée μs, ou ns.

La présente méthode permet par exemple de déterminer les conditions opérationnelles pour réaliser une ablation laser par une rafale d'impulsions femtosecondes de fréquence de répétition de l'ordre du GHz à la surface d'un matériau silicium. Dans le tableau 1, les conditions opérationnelles pour réaliser une ablation laser par une rafale d'impulsions femtosecondes de fréquence de répétition de l'ordre du GHz à la surface d'un matériau silicium sont répertoriées sous forme d'exemples indexés de A à G. Le coefficient de diffusion thermique D du silicium à température ambiante est égal à 0,86 cm²/s.

[Tableaux 1]

|   | f (GHz) | L (μm) | Nc calculé | $FT_{car}$ (J/cm²) | $F_{car}$ (J/cm²) | $L_m$ (μm) |
|---|---------|--------|------------|----------|----------|--------|
| A | 0,88 | 2,2 | 50 | 0,96 | 0,019 | 1,45 |
| B | 0,88 | 3,1 | 100 | 1,8 | 0,018 | 2,6 |
| C | 0,88 | 4,4 | 200 | 3,3 | 0,017 | 4 |
| D | 1,76 | 1,6 | 50 | | | |
| E | 1,76 | 2,2 | 100 | | | |
| F | 1,76 | 3,1 | 200 | | | |
| G | 3,52 | 2,2 | 198 | 1,9 | | |

Le tableau 1 liste les conditions opérationnelles pour réaliser une ablation laser sur un matériau silicium par une rafale d'impulsions femtosecondes de fréquence de répétition de l'ordre du GHz. Dans ce tableau $L_m$ correspond à la valeur expérimentale de la longueur d'essai L mesurée pour FT=$FT_{car}$ et N=Nc.

La fluence seuil Fs1 d'ablation d'une impulsion pour le silicium est égale à 0,46 J/cm². Dans les exemples A à G, la fluence par impulsion pour une rafale est nettement inférieure à la fluence seuil Fs1 d'ablation d'une impulsion pour le matériau silicium. Autrement dit, la fluence F par impulsion femtoseconde de la rafale est d'environ Fs1/25. La fluence F par impulsion femtoseconde de la rafale est inférieure de plus d'un ordre de grandeur à la fluence seuil Fs1 d'ablation pour une seule impulsion.

[Tableaux 2]

|   | f | L | Nc | $FT_{car}$ | $F_{car}$ | $FT_{opt}$ | 2Nc | 2FTcar |
|---|---|---|----|-----|------|-------|-----|--------|
|   | (GHz) | (μm) | | (J/cm²) | (J/cm²) | (J/cm²) | | (J/cm²) |
| H | 1,76 | 2,55 | 100 | 3 | 0,03 | 6< $FT_{opt}$<18 | 200 | 6 |
| I | 1,76 | 3,62 | 200 | 6 | 0,03 | 12< $FT_{opt}$<36 | 400 | 12 |
| J | 1,76 | 5,12 | 400 | 14 | 0,035 | 28< $FT_{opt}$<84 | 800 | 28 |

Le tableau 2 liste les conditions opérationnelles pour réaliser une ablation laser sur un matériau cuivre par une rafale d'impulsions femtosecondes de fréquence de répétition de l'ordre du GHz.

La fluence seuil Fs1 d'ablation d'une impulsion pour le cuivre est à 1,7 J/cm$^2$. Le coefficient de diffusion thermique D du cuivre à température ambiante est égal à 1,15 cm$^2$/s. Autrement dit, la fluence F par impulsion femtoseconde de la rafale est égale à environ Fs1/50. Ici aussi, la fluence F par impulsion femtoseconde de la rafale est inférieure de plus d'un ordre de grandeur à la fluence seuil Fs1 d'ablation pour une seule impulsion. La fluence F par impulsion est inférieure d'un facteur compris entre un ordre de grandeur et deux ordres de grandeur par rapport à la fluence seuil Fs1 d'ablation pour une seule impulsion.

Pour l'ensemble des exemples A à J les dimensions transverses du faisceau focalisé d'impulsions incident sur le matériau à ablater sont de 24 $\mu$m. En pratique, les dimensions transverses du faisceau focalisé d'impulsions incident sur le matériau à ablater sont inférieures ou égales à 200 $\mu$m.

La fréquence de répétition C d'une rafale peut être comprise entre 1 kHz et 200 kHz. La rafale d'impulsions a par exemple une durée comprise entre 1 ns et quelques centaines de ns. Les impulsions d'une rafale ont par exemple une durée comprise entre 1 fs et inférieure à 1 ps. Le nombre entier N d'impulsions peut être compris entre 10 et 400 ou plus. La valeur de la fluence F de chaque impulsion de la rafale est par exemple comprise entre 0,001 J/cm$^2$ et 1 J/cm$^2$. Le matériau à ablater peut être choisi parmi un matériau semi-conducteur, métallique, diélectrique, polymère, organique ou composite.

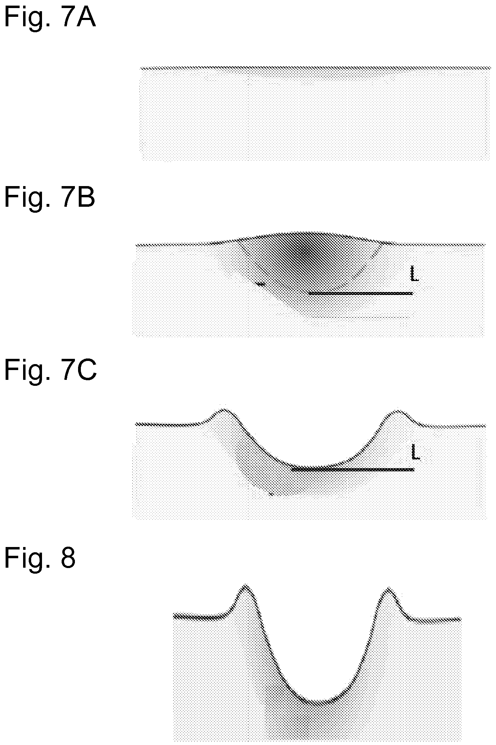

Les figure 7A à 7C représentent les différentes étapes d'un procédé d'ablation laser par une rafale d'impulsions femtosecondes de fréquence de répétition de l'ordre du GHz à la surface d'un matériau, en fonction de la fluence totale d'une rafale de Nc impulsions femtoseconde.

La figure 7A illustre la surface du matériau recevant un nombre Nc d'impulsions de chauffage et d'ablation. Le chauffage de la surface du matériau démarre et la fluence totale FT est très inférieure à la fluence totale caractéristique FT$_{car}$. Dans cet exemple d'illustration, N = Nc et FT<<FT$_{car}$.

La figure 7B illustre la surface du matériau ayant reçu un nombre Nc d'impulsions de chauffage et d'ablation avec une fluence totale FT plus élevée que dans le cas présenté sur le schéma du haut. La surface du matériau est chauffée sur une longueur s'approchant de la longueur d'essai L et la fluence totale FT est inférieure à la fluence totale caractéristique FT$_{car}$. Dans cet exemple d'illustration, N = Nc et FT<FT$_{car}$.

La figure 7C illustre la surface du matériau recevant un nombre Nc d'impulsions de chauffage et d'ablation. Le seuil d'ablation du matériau est atteint, l'ablation du matériau est possible et la fluence totale FT est égale à la fluence totale caractéristique FT$_{car}$. Dans cet exemple d'illustration, N = Nc et FT=FT$_{car}$. La profondeur d'ablation obtenue est proche de la longueur d'essai L.

La figure 8 représente l'étape d'ajout du nombre Na d'impulsions complémentaires laser par une rafale d'impulsions femtosecondes de fréquence de répétition de l'ordre du GHz à la surface d'un matériau. Le seuil est alors atteint pour la fluence totale FT=FTcar2. La profondeur d'ablation est supérieure à la profondeur d'essai L.

Le schéma de la figure 8 illustre la surface du matériau recevant un nombre d'impulsions N égal au nombre Nc+Na. Quand N est égal à Nc+Na, la profondeur d'ablation augmente en fonction de Na et la fluence totale FT est égale à l'autre fluence totale caractéristique FT$_{car2}$ soit FT$_{car}$+Na. FT$_{car}$/Nc ou (Nc+Na).(F$_{car}$/Nc). Dans cet exemple d'illustration, N = Nc+Na et FT=FT$_{car2}$.

Une ablation optimisée peut être obtenue par des réglages combinant la fréquence de répétition f intra-rafale dans le domaine du GHz, le nombre d'impulsions N par rafale et l'énergie totale des impulsions. Dans les exemples A et B du Tableau 1 reportés également dans la figure 2, la rafale ayant un nombre d'impulsions N égal à 100 impulsions (exemple B, points carrés) a permis d'atteindre un rendement d'ablation supérieur à la rafale ayant un nombre d'impulsions N égal à 50 impulsions (exemple A, points ronds), pour une même fréquence de répétition f intra-rafale égale à 0,88 GHz. Cet exemple montre qu'une fois le seuil d'ablation atteint, pour une même fréquence de répétition intra-rafale, l'augmentation de l'énergie totale de la rafale et donc de la fluence totale de la rafale contribue à un processus d'ablation plus efficace. Le phénomène étant limité par une saturation de l'efficacité d'ablation pour des énergies trop grandes, la fluence maximale dépend de chaque matériau et est par exemple de l'ordre de 50 J/cm$^2$.

La méthode de détermination des conditions opérationnelles d'un procédé d'ablation laser par une rafale d'impulsions femtosecondes de fréquence de répétition de l'ordre du GHz à la surface d'un matériau permet de contrôler le nombre d'impulsion N et l'énergie de la rafale E$_b$.

La présente méthode est définie pour des matériaux ayant une diffusivité thermique connue D.

Le tableau 3 donne des exemples de valeur du coefficient de diffusion thermique D pour différents matériaux.

[Tableaux 3]

| Matériaux | Coefficient de diffusion thermique D (cm$^2$/s à 22°C) |
|---|---|
| Aluminium | 0,94 |
| Cuivre | 1,15 |

(suite)

| Matériaux | Coefficient de diffusion thermique D ($cm^2$/s à 22°C) |
|---|---|
| Fer | 0,19 |
| Nickel | 0,16 |
| Argent | 1,61 |
| Étain | 0,39 |
| Zinc | 0,40 |
| Magnésium | 0,54 |
| Acier | 0,14 |
| Acier | 0,096 |
| Titane | 0,019 |

La présente méthode nécessite que l'énergie $E_b$ par rafale soit définie de sorte à obtenir une fluence F de chaque impulsion de la rafale inférieure à la fluence seuil Fs1 d'ablation du matériau considéré par une seule impulsion.

La présente méthode permet avantageusement d'ajuster la profondeur d'ablation obtenue en fonction du nombre d'impulsion N de la rafale à fluence F fixée par impulsion.

La présente méthode permet avantageusement d'ajuster la profondeur d'ablation obtenue en fonction de la fluence totale de la rafale pour un nombre d'impulsion N fixé.

Pour chaque matériau et pour une profondeur d'ablation donnée il est possible de déterminer le nombre N d'impulsions correspondant à un seuil d'ablation en fonction de la fluence totale de la rafale.

Contrairement aux a priori négatifs dans le domaine technique de l'ablation de matériau par des impulsions femtosecondes de fréquence de répétition f intra-rafale dans le domaine du GHz, il est possible dans des conditions opérationnelles précises d'obtenir des efficacités d'ablation importantes et de bonnes qualités d'usinage.

Par exemple, pour un matériau silicium, le nombre N d'impulsions est compris entre 50 et 200, la fluence par impulsion caractéristique d'un seuil d'ablation GHz $F_{car}$ est d'environ 0,018 J/$cm^2$, la fréquence de répétition intra-rafale est comprise entre 0,88 GHz et 3,52 GHz pour une profondeur d'essai L comprise entre 2,2 $\mu$m et 4,4 $\mu$m.

Par exemple, pour un matériau cuivre, le nombre N d'impulsions est compris entre 100 et 400, la fluence par impulsion caractéristique d'un seuil d'ablation GHz $F_{car}$ est d'environ 0,03 J/$cm^2$, la fréquence de répétition intra-rafale étant égale à 1,76 GHz pour une profondeur d'essai L comprise entre 2,5 $\mu$m et 5,2 $\mu$m.

Le procédé d'ablation laser de la présente divulgation s'applique en particulier à des matériaux tels que le verre ou la céramiques transparente. Ces matériaux sont transparents, une absorption en surface a lieu sur une profondeur correspondant à la longueur de Rayleigh. De plus, ces matériaux sont cassants. Cela signifie que toute fissure en surface ou en volume peut se développer facilement et conduire à d'importants dommages. Enfin, le nombre d'impulsions dans la rafale est de préférence limité au minimum nécessaire. Dans ces circonstances, la formule de Nc ne s'applique pas, seule la condition sur le nombre minimum d'impulsions de la rafale N supérieur à 10 s'applique. De plus, dans ces matériaux, la diffusion thermique doit être réduite. Une des méthodes pour réduire la diffusion thermique est d'utiliser une longueur d'onde source laser au-delà de la gamme de transparence du substrat de verre donné, par exemple dans la gamme UV ou UV lointain (DUV pour « deep UV » en anglais).

Le procédé d'ablation laser de la présente divulgation s'applique avantageusement aussi à l'ablation d'un verre de faible rugosité de surface. Dans ce cas, la lumière est emprisonnée à la surface des irrégularités et diffusée sous la surface. La rugosité de surface induit une dégradation optique. La rugosité de surface peut être générée au moyen d'un laser dont les impulsions sont pilotées spatialement de manière à obtenir ces irrégularités. La rugosité de surface peut être induite par des moyens mécaniques, par exemple le sablage. Les exigences pour la rugosité moyenne, sont de l'ordre d'une rugosité de surface entre 400 nm et 10 $\mu$m (rugosité « RMS » (Root mean square slope) > 0.25).

Connaissant les conditions pour obtenir une ablation, la présente divulgation permet aussi de déterminer les conditions opérationnelles pour réaliser un soudage sans perte de matière entre pièces d'un même matériau. La présente divulgation s'applique donc aussi à un procédé de soudage laser, basé sur l'application d'une rafale d'impulsions laser femtosecondes à une fréquence de répétition intra-rafale f comprise entre quelques centaines de MHz et 100 GHz, dans lequel la rafale d'impulsions laser femtosecondes comprend un nombre N d'impulsions, le nombre N d'impulsions de la rafale d'impulsions laser étant inférieur au nombre Nc d'impulsions de chauffage et d'ablation, Nc étant défini par l'équation Nc=($L^2$.f)/D, où L représente une profondeur d'essai et D représente un coefficient de diffusion thermique du matériau, et où la rafale d'impulsions laser femtosecondes a une fluence totale inférieure à une fluence totale caractéristique FTcar adaptée pour générer un cratère d'ablation dans le matériau et chaque impulsion de la rafale ayant une fluence F inférieure à une fluence seuil d'ablation Fs1 du matériau par une seule impulsion laser. Le nombre N d'impulsions de la rafale d'impulsions laser est supérieur ou égal à 10.

**Revendications**

1. Méthode de détermination des conditions opérationnelles d'un procédé d'ablation ou de soudage laser femtoseconde à très haute cadence pour un matériau donné,
la méthode étant **caractérisée par** :
une première étape de détermination d'un ensemble de paramètres d'une rafale d'impulsions laser adapté pour générer un cratère d'ablation dans le matériau, l'ensemble de paramètres consistant en une fréquence de répétition intra-rafale f comprise entre quelques centaines de MHz et 100 GHz, un nombre N d'impulsions de la rafale d'impulsions laser supérieur ou égal à 10, une fluence totale caractéristique $FT_{car}$ de la rafale d'impulsions et une fluence caractéristique par impulsion inférieure à une fluence seuil d'ablation Fs1 du matériau par une seule impulsion laser, dans laquelle le nombre N d'impulsions de la rafale d'impulsions laser est supérieur ou égal à un nombre Nc d'impulsions de chauffage et d'ablation, Nc étant défini par l'équation $Nc=(L^2.f)/D$, où L représente une profondeur d'essai et D représente un coefficient de diffusion thermique du matériau à ablater, Nc étant supérieur ou égal à 10, et où la fluence caractéristique par impulsion est égale à $F_{car}=FT_{car}/Nc$.

2. Méthode selon la revendication 1, comprenant une détermination expérimentale de la valeur de la fluence totale caractéristique $FT_{car}$ de la rafale pour le nombre d'impulsions Nc, $FT_{car}$ étant la fluence totale minimale d'obtention d'un cratère en surface du matériau.

3. Méthode selon l'une des revendications 1 à 2, comprenant une deuxième étape de détermination d'une fluence totale opérationnelle $FT_{opt}$ pour une rafale d'impulsions laser comprenant Nc impulsions laser.

4. Méthode selon la revendication 3, dans laquelle la fluence totale opérationnelle $FT_{opt}$ est comprise entre 2 fois la fluence totale caractéristique $FT_{car}$ et 6 fois la fluence totale caractéristique $FT_{car}$.

5. Méthode selon l'une des revendications 1 à 4, comprenant une troisième étape de détermination d'un nombre N d'impulsions de la rafale pour ablater le matériau sur une profondeur supérieure à la profondeur d'essai L, N étant supérieur à Nc et la fluence par impulsion de la rafale étant égale à la fluence totale caractéristique $FT_{car}$ divisée par le nombre Nc d'impulsions de chauffage et d'ablation.

6. Méthode selon l'une des revendication 1 à 5, dans laquelle une autre fluence caractéristique $FT_{car2}$ est calculée en fonction du nombre N d'impulsion de la rafale différent de Nc, et N=Nc+Na où Na est un nombre entier positif ou négatif avec

$$FT_{car2}=FT_{car}+Na.FT_{car}/Nc.$$

7. Procédé d'ablation laser d'un matériau donné, **caractérisé par** :

détermination des conditions opérationnelles d'un procédé d'ablation laser femtoseconde à très haute cadence pour un matériau donné selon la méthode définie dans l'une des revendications 1 à 6;
application d'une rafale d'impulsions laser femtosecondes avec de telles conditions opérationnelles, la rafale d'impulsions laser femtosecondes étant à une fréquence de répétition intra-rafale f comprise entre quelques centaines de MHz et 100 GHz, la rafale d'impulsions laser femtosecondes comprenant un nombre N d'impulsions supérieur ou égal à 10, la rafale d'impulsions laser femtosecondes ayant une fluence totale supérieure ou égale à une fluence totale caractéristique $FT_{car}$ adaptée pour générer un cratère d'ablation dans le matériau et chaque impulsion de la rafale ayant une fluence F inférieure ou égale à une fluence seuil d'ablation Fs1 du matériau par une seule impulsion laser, dans lequel le nombre N d'impulsions de la rafale d'impulsions laser est supérieur ou égal à un nombre Nc d'impulsions de chauffage et d'ablation, Nc étant défini par l'équation $Nc=(L^2.f)/D$, où L représente une profondeur d'essai et D représente un coefficient de diffusion thermique du matériau à ablater, Nc étant supérieur ou égal à 10, et où la fluence caractéristique par impulsion est égale à $F_{car}=FT_{car}/Nc$.

8. Procédé d'ablation laser selon la revendication 7 dans lequel le nombre N d'impulsions de la rafale d'impulsions laser est supérieur ou égal à un nombre Nc d'impulsions de chauffage et d'ablation, Nc étant défini par l'équation Nc=(L$^2$.f)/D, où L représente une profondeur d'essai et D représente un coefficient de diffusion thermique du matériau à ablater, Nc étant supérieur ou égal à 10, et où la fluence caractéristique par impulsion est égale à F$_{car}$=FT$_{car}$/Nc.

9. Procédé d'ablation laser selon la revendication 7 ou 8 dans lequel le nombre N d'impulsions de la rafale est compris entre 100 et 10000.

10. Procédé d'ablation laser selon l'une des revendications 7 à 9 dans lequel chaque impulsion de la rafale a une fluence F inférieure ou égale d'un ordre de grandeur à la fluence seuil d'ablation Fs1 du matériau par une seule impulsion laser.

11. Procédé d'ablation laser selon la revendication la revendication 10 dans lequel chaque impulsion de la rafale a une fluence F inférieure d'un facteur compris entre un ordre de grandeur et deux ordres de grandeur par rapport à la fluence seuil Fs1 d'ablation par une seule impulsion laser.

12. Procédé d'ablation laser selon l'une des revendications 7 à 11 dans lequel les dimensions transverses du faisceau d'impulsions laser incident sur le matériau à ablater sont inférieures ou égales à 200 μm.

13. Procédé d'ablation laser selon l'une des revendications 7 à 12 dans lequel une rafale a une énergie totale comprise entre 1 μJ et 20 mJ.

14. Procédé d'ablation laser selon l'une des revendications 7 à 13 comprenant l'application d'une pluralité de rafales à une cadence de répétition comprise entre 10 kHz et 40 MHz.

15. Procédé de soudage laser entre pièces d'un matériau déterminé, **caractérisé par** :

   détermination des conditions opérationnelles d'un procédé de soudage laser femtoseconde à très haute cadence pour un matériau déterminé selon la méthode définie dans l'une des revendications 1 à 6; If
   application d'une rafale d'impulsions laser femtosecondes avec de telles conditions opérationnelles, une fréquence de répétition intra-rafale étant comprise entre quelques centaines de MHz et 100 GHz, la rafale d'impulsions laser femtosecondes comprenant un nombre N d'impulsions, le nombre N d'impulsions de la rafale d'impulsions laser étant inférieur à un nombre Nc d'impulsions de chauffage et d'ablation, Nc étant défini par l'équation Nc=(L$^2$.f)/D, où L représente une profondeur et D représente un coefficient de diffusion thermique du matériau, où la rafale d'impulsions laser femtosecondes a une fluence totale inférieure à une fluence totale caractéristique FTcar adaptée pour générer un cratère d'ablation dans le matériau et chaque impulsion de la rafale ayant une fluence F inférieure à une fluence seuil d'ablation Fs1 du matériau par une seule impulsion laser.

## Patentansprüche

1. Verfahren zur Bestimmung der Betriebsbedingungen eines Verfahrens zur Femtosekundenablation oder zum Femtosekundenschweißen mit hoher Wiederholrate für ein bestimmtes Material,

   wobei das Verfahren durch
   einen ersten Schritt des Bestimmens einer Gesamtheit von Parametern eines Laserimpulsstoßes, die zum Erzeugen eines Ablationskraters im Material ausgewählt ist, wobei die Gesamtheit von Parametern aus einer zwischen einigen Hundert MHz und 100 GHz liegenden Wiederholfrequenz f innerhalb des Impulsstoßes, einer Anzahl N gleich oder größer als 10 von Impulsen des Laserimpulsstoßes, eine typische Gesamtfluenz FT$_{car}$ des Impulsstoßes und eine typische Fluenz pro Impuls von kleiner als einer Ablationsschwellenfluenz Fs1 des Materials je einzelnem Laserimpuls, wobei die Anzahl N von Impulsen des Laserimpulsstoßes gleich oder größer als eine Anzahl Nc von Heiz- und Ablationsimpulsen ist, wobei Nc durch die Gleichung Nc=(L$^2$·f)/D definiert ist, wobei L für eine Versuchstiefe steht und D für einen thermischen Diffusionskoeffizienten des abzutragenden Materials steht, wobei Nc gleich oder größer als 10 ist und wobei die typische Fluenz pro Impuls gleich F$_{car}$=FT$_{car}$/Nc ist,
   gekennzeichnet ist.

2. Verfahren gemäß Anspruch 1, mit einer experimentellen Bestimmung des Wertes der typischen Gesamtfluenz FT$_{car}$ des Stoßes für die Anzahl Impulse Nc, wobei FT$_{car}$ die minimale Gesamtfluenz zum Erhalten eines Kraters an der Oberfläche des Materials ist.

3. Verfahren gemäß einem der Ansprüche 1 bis 2, mit einem zweiten Schritt des Bestimmens einer betriebsmäßigen Gesamtfluenz $FT_{opt}$ für einen Laserimpulsstoß mit einer Anzahl Nc Laserimpulsen.

4. Verfahren gemäß Anspruch 3, bei dem die betriebsmäßige Gesamtfluenz $FT_{opt}$ zwischen dem Zweifachen der typischen Gesamtfluenz $FT_{car}$ und dem Sechsfachen der typischen Gesamtfluenz $FT_{car}$ liegt.

5. Verfahren gemäß einem der Ansprüche 1 bis 4, mit einem dritten Schritt des Bestimmens einer Anzahl N von Impulsen des Stoßes zum Abtragen des Materials auf einer Tiefe, die größer als die Versuchstiefe L ist, wobei N größer als Nc ist und die Fluenz pro Impuls des Stoßes gleich der typischen Gesamtfluenz $FT_{car}$, dividiert durch die Anzahl Nc von Heiz- und Ablationsimpulsen, ist.

6. Verfahren gemäß einem der Ansprüche 1 bis 5, bei dem eine weitere typische Fluenz $FT_{car2}$ in Abhängigkeit von der von Nc verschiedenen Anzahl N von Impulsen des Stoßes berechnet wird, mit N=Nc+Na, wobei Na eine positive oder negative ganze Zahl mit $FT_{car2}+Na·FT_{car}/Nc$ ist.

7. Laserablationsverfahren für ein bestimmtes Material, **gekennzeichnet durch**:

   Bestimmen der Betriebsbedingungen eines Verfahrens zur Femtosekundenablation oder zum Femtosekundenschweißen mit hoher Wiederholrate für ein bestimmtes Material gemäß dem in einem der Ansprüche 1 bis 6 definierten Verfahren,
   Anwenden eines Femtosekundenlaserimpulsstoßes unter diesen Betriebsbedingungen,
   wobei der Femtosekundenlaserimpulsstoß eine zwischen einigen Hundert MHz und 100 GHz liegende Wiederholfrequenz f innerhalb des Impulsstoßes hat, wobei der Femtosekundenlaserimpulsstoß eine Anzahl N gleich oder größer als 10 Impulse des Laserimpulsstoßes aufweist, wobei der Femtosekundenlaserimpulsstoß eine Gesamtfluenz von gleich oder größer als eine typische Gesamtfluenz $FT_{car}$ hat, die zum Erzeugen eines Ablationskraters im Material ausgewählt ist, und wobei jeder Impulsstoß eine typische Fluenz pro Laserimpuls von kleiner als oder gleich einer Ablationsschwellenfluenz Fs1 des Materials je einzelnem Laserimpuls ist, wobei die Anzahl N von Impulsen des Laserimpulsstoßes gleich oder größer als einer Anzahl Nc von Heiz- und Ablationsimpulsen ist, wobei Nc durch die Gleichung $Nc=(L^2·f)/D$ definiert ist, wobei L für eine Versuchstiefe steht und D für einen thermischen Diffusionskoeffizienten des abzutragenden Materials steht, wobei Nc gleich oder größer als 10 ist und wobei die typische Fluenz pro Impuls gleich $F_{car}=FT_{car}/Nc$ ist.

8. Laserablationsverfahren gemäß Anspruch 7, bei dem die Anzahl N von Impulsen des Laserimpulsstoßes gleich oder größer als eine Anzahl Nc von Heiz- und Ablationsimpulsen ist, wobei Nc durch die Gleichung $Nc=(L^2·f)/D$ definiert ist, wobei L für eine Versuchstiefe steht und D für einen thermischen Diffusionskoeffizienten des abzutragenden Materials steht, wobei Nc gleich oder größer als 10 ist und wobei die typische Fluenz pro Impuls gleich $F_{car}=FT_{car}/Nc$ ist.

9. Laserablationsverfahren gemäß einem der Ansprüche 7 oder 8, bei dem die Anzahl N von Impulsen des Stoßes zwischen 100 und 10.000 beträgt.

10. Laserablationsverfahren gemäß einem der Ansprüche 7 bis 9, bei dem jeder Impuls des Stoßes eine Fluenz von gleich oder um eine Größenordnung kleiner als die Ablationsschwellenfluenz Fs1 des Materials pro Laserimpuls hat.

11. Laserablationsverfahren gemäß Anspruch 10, bei dem jeder Impuls des Stoßes eine Fluenz F von kleiner als einem zwischen einer Größenordnung und zwei Größenordnungen gegenüber der Ablationsschwellenfluenz Fs1 pro einzelnem Laserimpuls liegendem Faktor hat.

12. Laserablationsverfahren gemäß einem der Ansprüche 7 bis 11, bei dem die Querabmessungen des auf das abzutragende Material einfallenden Laserimpulsstrahls gleich oder kleiner als 200 $\mu$m sind.

13. Laserablationsverfahren gemäß einem der Ansprüche 7 bis 12, bei dem der Stoß eine Gesamtenergie zwischen 1 $\mu$J und 20 mJ hat.

14. Laserablationsverfahren gemäß einem der Ansprüche 7 bis 13, das die Anwendung einer Mehrzahl von Stößen bei einer Wiederholfrequenz zwischen 10 kHz und 40 MHz aufweist.

**15.** Verfahren zum Laserschweißen zwischen Teilen eines bestimmten Materials, **gekennzeichnet durch**:
Bestimmen der Betriebsbedingungen eines Verfahrens zur Femtosekundenablation oder zum Femtosekundenschweißen mit hoher Wiederholrate für ein bestimmtes Material gemäß dem in einem der Ansprüche 1 bis 6 definierten Verfahren; Anwenden eines Femtosekundenlaserimpulsstoßes unter diesen Betriebsbedingungen, wobei eine Wiederholfrequenz f innerhalb des Impulsstoßes zwischen einigen Hundert MHz und 100 GHz liegt, wobei der Femtosekundenlaserimpulsstoß eine Anzahl N Impulse aufweist, wobei die Anzahl N von Impulsen des Laserimpulsstoßes kleiner als eine Anzahl Nc von Heiz- und Ablationsimpulsen ist, wobei Nc durch die Gleichung $Nc=(L^2\cdot f)/D$ definiert ist, wobei L für eine Versuchstiefe steht und D für einen thermischen Diffusionskoeffizienten des abzutragenden Materials steht, wobei der Femtosekundenlaserimpulsstoß eine Gesamtfluenz von kleiner als eine typische Gesamtfluenz $FT_{car}$ hat, die zum Erzeugen eines Ablationskraters im Material ausgewählt ist, und wobei jeder Impulsstoß eine typische Fluenz pro Laserimpuls von kleiner als eine Ablationsschwellenfluenz Fs1 des Materials je einzelnem Laserimpuls hat.

**Claims**

**1.** A method for determining the operational conditions of a method for high-repetition rate femtosecond laser ablation or welding for a given material, the method being **characterized by** :
a first step of determining a set of parameters of a burst of laser pulses adapted to generate an ablation crater in the material, the set of parameters consisting of an intra-burst repetition frequency f comprised between several hundred MHz and 100 GHz, a number N of pulses of the burst of laser pulses greater than or equal to 10, a characteristic total fluence $FT_{char}$ of the burst of pulses and a characteristic fluence per pulse below an ablation threshold fluence Fs1 of the material by a single laser pulse, wherein the number N of pulses of the burst of laser pulses is greater than or equal to a number Nc of heating and ablation pulses, with Nc being defined by the equation $Nc=(L^2.f)/D$, where L represents a test depth and D represents a thermal diffusion coefficient of the material to be ablated, with Nc being greater than or equal to 10, and where the characteristic fluence per pulse is equal to $F_{char}=FT_{char}/Nc$.

**2.** The method according to claim 1, comprising an experimental determination of the value of the characteristic total fluence $FT_{char}$ of the burst for the number of pulses Nc, $FT_{char}$ being the minimum total fluence for obtaining a crater at the surface of the material.

**3.** The method according to any one of claims 1 to 2, comprising a second step of determining an operational total fluence $FT_{opt}$ for a burst of laser pulses comprising Nc laser pulses.

**4.** The method according to claim 3, wherein the operational total fluence $FT_{opt}$ is comprised between 2 times the characteristic total fluence $FT_{char}$ and 6 times the characteristic total fluence $FT_{char}$.

**5.** The method according to any one of claims 1 to 4, comprising a third step of determining a number N of pulses of the burst to ablate the material to a depth greater than the test depth L, N being greater than Nc and the fluence per pulse of the burst being equal to the characteristic total fluence $FT_{char}$ divided by the number Nc of heating and ablation pulses.

**6.** The method according to any one of claims 1 to 5, wherein another characteristic fluence $FT_{char2}$ is calculated as a function of the number N of pulses of the burst different from Nc, and N=Nc+Na where Na is a positive or negative integer number with $FT_{char2}=FT_{char}+Na.FT_{char}/Nc$.

**7.** A method of laser ablation of a determined material, **characterized by** :

determining operational conditions of a method for high-repetition rate femtosecond laser ablation for a given material according to the method defined in any one of claims 1 to 6;
application of a burst of femtosecond laser pulses with such operational conditions, the burst of femtosecond laser pulses being at an intra-burst repetition frequency f comprised between several hundred MHz and 100 GHz, the burst of femtosecond laser pulses comprising a number N of pulses greater than or equal to 10, the burst of femtosecond laser pulses having a total fluence greater than or equal to a characteristic total fluence $FT_{char}$ adapted to generate an ablation crater in the material and each pulse of the burst having a fluence F less than or equal to an ablation threshold fluence Fs1 of the material by a single laser pulse, wherein the number N of pulses of the burst of laser pulses is greater than or equal to a number Nc of heating and ablation pulses, with Nc being defined by the equation $Nc=(L^2.f)/D$, where L represents a test depth and D represents a thermal diffusion coefficient of the material to be ablated, with Nc being greater than or equal to 10, and where the characteristic fluence per pulse is equal to $F_{char}=FT_{char}/Nc$.

8.  The laser ablation method according to claim 7 wherein the number N of pulses of the burst of laser pulses is greater than or equal to a number Nc of heating and ablation pulses, with Nc being defined by the equation $Nc=(L^2.f)/D$, where L represents a test depth and D represents a thermal diffusion coefficient of the material to be ablated, with Nc being greater than or equal to 10, and where the characteristic fluence per pulse is equal to $F_{char}=FT_{char}/Nc$.

9.  The laser ablation method according to claim 7 or 8 wherein the number N of pulses of the burst is comprised between 100 and 10000.

10. The laser ablation method according to any one of claims 7 to 9 wherein each pulse of the burst has a fluence F one order of magnitude less than or equal to the ablation threshold fluence Fs1 of the material by a single laser pulse.

11. The laser ablation method according to claim 10 wherein each pulse of the burst has a fluence F less, by a factor comprised between one order of magnitude and two orders of magnitude, than the threshold fluence Fs1 for ablation by a single laser pulse.

12. The laser ablation method according to any one of claims 7 to 11 wherein the transverse dimensions of the incident beam of laser pulses on the material to be ablated are less than or equal to 200 $\mu$m.

13. The laser ablation method according to any one of claims 7 to 12 wherein a burst has a total energy comprised between 1 $\mu$J and 20 mJ.

14. The laser ablation method according to any one of claims 7 to 13 comprising applying a plurality of bursts at a repetition rate comprised between 10 kHz and 40 MHz.

15. A method of laser welding between parts of a determined material, **characterized by**:

    determining operational conditions of a method for high-repetition rate femtosecond laser ablation for a given material determined according to the method defined in any one of claims 1 to 6;
    application of a burst of femtosecond laser pulses with such operational conditions, an intra-burst repetition frequency f being comprised between several hundred MHz and 100 GHz, the burst of femtosecond laser pulses comprising a number N of pulses, the number N of pulses of the burst of laser pulses being less than a number Nc of heating and ablation pulses, with Nc being defined by the equation $Nc=(L^2.f)/D$, where L represents a depth and D represents a thermal diffusion coefficient of the material, where the burst of femtosecond laser pulses has a total fluence less than a characteristic total fluence $FT_{char}$ adapted to generate an ablation crater in the material and each pulse of the burst having a fluence F below an ablation threshold fluence Fs1 of the material by a single laser pulse.

Fig. 1

Fig. 2

## Fig. 3

## Fig. 4

## Fig. 5

## Fig. 6

Fig. 7A

Fig. 7B

Fig. 7C

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012187860 A1

- US 2013008880 A1